# FASCICULE DE BREVET EUROPEEN

(11) **EP 1 213 980 B1**
(45) Date de publication et mention de la délivrance du brevet: **17.11.2004**
(21) Numéro de dépôt: 00964321.4
(22) Date de dépôt: 19.09.2000
(51) Int. Cl.: A42B 3/04

(54) **DISPOSITIF DE VERROUILLAGE D'UNE POSITION D'UNE PIECE MOBILE PAR RAPPORT A UNE PIECE FIXE**
VORRICHTUNG ZUR POSITIONSVERRIEGELUNG EINES BEZÜGLICH EINES ORTSFESTEN ELEMENTS BEWEGLICHEN TEILS
DEVICE FOR LOCKING IN POSITION A MOBILE PART RELATIVE TO A FIXED PART

(30) Priorité: 24.09.1999 FR 9911969
(43) Date de publication de la demande: 19.06.2002
(73) Titulaire: THALES AVIONICS S.A., 78140 Vélizy Villacoublay (FR)
(72) Inventeur: MEYER, Guy, Thomson-CSF Prop. Intel., Dép. Brevets, F-94117 Arcueil Cedex (FR); DARRIEUX, Jean-Marc, Thomson-CSF Prop. Intel. Dep., F-94117 Arcueil Cedex (FR)
(74) Mandataire: Collet, Alain
(86) Numéro de dépôt international: PCT/FR2000/002595
(87) Numéro de publication internationale: WO 2001/021022

(56) Documents cités:
- US-A- 5 226 181
- US-A- 5 254 852
- US-A- 5 742 937

## Description

L'invention se rapporte à un dispositif de verrouillage d'une position d'une pièce mobile par rapport à une pièce fixe (voir par exemple le document US.A.5 226 181).

Lorsqu'on souhaite verrouiller avec précision la position d'une pièce mobile par rapport à une pièce fixe, il est nécessaire de maîtriser à la fois la position relative d'une pièce par rapport à l'autre ainsi que le verrouillage de cette position.

Un positionnement isostatique constitue un positionnement précis et reproductible. Le verrouillage d'un tel positionnement nécessite souvent plusieurs manoeuvres ce qui complique le dispositif et allonge le temps de mise en oeuvre.

A titre d'exemple, on peut citer une pièce mobile positionnée par rapport à une pièce fixe selon un plan supprimant trois degrés de liberté de la pièce mobile par rapport à la pièce fixe, selon une droite parallèle au plan supprimant deux autres degrés de liberté, et selon un point distinct de la droite et du plan supprimant le dernier degré de liberté. Pour verrouiller cette position, on utilise une bride dont l'effort s'oppose au décollement de la pièce mobile par rapport au plan de positionnement. Avant de serrer la bride, il est nécessaire d'appliquer à la pièce mobile un ou plusieurs autres efforts supplémentaires, distincts de l'effort appliqué par la bride, plaquant la pièce mobile contre la droite et le point de positionnement. Une fois la bride serrée il est possible de relâcher le ou les efforts supplémentaires. Le maintien de la pièce mobile par rapport à la pièce fixe contre la droite et le point de positionnement se fait alors par adhérence. Dans l'exemple cité ci-dessus, si le ou les efforts supplémentaires ne sont pas suffisants, on risque de ne pas obtenir un appui correct contre la droite ou le point et ainsi de compromettre le bon positionnement. De plus il est nécessaire d'effectuer au moins deux manoeuvres pour assurer le verrouillage du positionnement. Une première manoeuvre consiste à appliquer le ou les efforts supplémentaires et une deuxième manoeuvre consiste à serrer la bride. La nécessité de ces multiples manoeuvres augmente le temps nécessaire au positionnement et au verrouillage.

L'invention a pour but de pallier ces inconvénients en proposant un dispositif simple et rapide à mettre en oeuvre.

Pour atteindre ce but, l'invention a pour objet un dispositif de verrouillage d'une position d'une pièce mobile par rapport à une pièce fixe, le positionnement de la pièce mobile par rapport à la pièce fixe étant isostatique, caractérisé en ce que le dispositif comporte des moyens générant un effort s'opposant au décollement de tous les points de contact isostatiques entre la pièce mobile et la pièce fixe afin de verrouiller la position.

Un avantage lié au positionnement isostatique est d'obtenir une grande reproductibilité lors de positionnements successifs de la pièce mobile par rapport à la pièce fixe même si les deux pièces, tout au moins leurs zones de contact, ne sont pas réalisées avec précision. L'absence d'obligation de précision permet en outre de réduire le coût de réalisation des deux pièces.

L'invention trouve une utilisation particulière dans le montage d'un composant optomécanique sur un casque. Ce composant comporte par exemple une paire de lunette de vision nocturne.

Dans cet exemple, il est nécessaire que la pupille de chaque lunette soit positionnée avec précision devant l'oeil de la personne portant le casque. L'invention permet une précision suffisante lors de démontages et remontages successifs du composant optomécanique. L'invention permet en outre à la personne portant le casque de monter le composant optomécanique d'une seule main en aveugle, c'est à dire sans visibilité sur les moyens de mise en position et les moyens de verrouillage.

L'invention sera mieux comprise et d'autres avantages apparaîtront à la lecture de la description détaillée d'un mode de réalisation de l'invention illustré par le dessin joint dans lequel :
- la figure 1 représente un composant optomécanique dont la position par rapport à un casque est verrouillée ;
- la figure 2 représente le composant optomécanique et le casque, représentés figure 1, à distance l'un de l'autre ;
- la figure 3 représente une pièce fixe ;
- la figure 4 représente une pièce mobile ;
- la figure 5 représente en vue éclatée la pièce mobile;
- la figure 6 représente en vue de dessus la pièce mobile en position verrouillée par rapport à la pièce fixe ;
- les figures 7, 8 et 9 représentent en coupe la pièce mobile en position par rapport à la pièce fixe ;

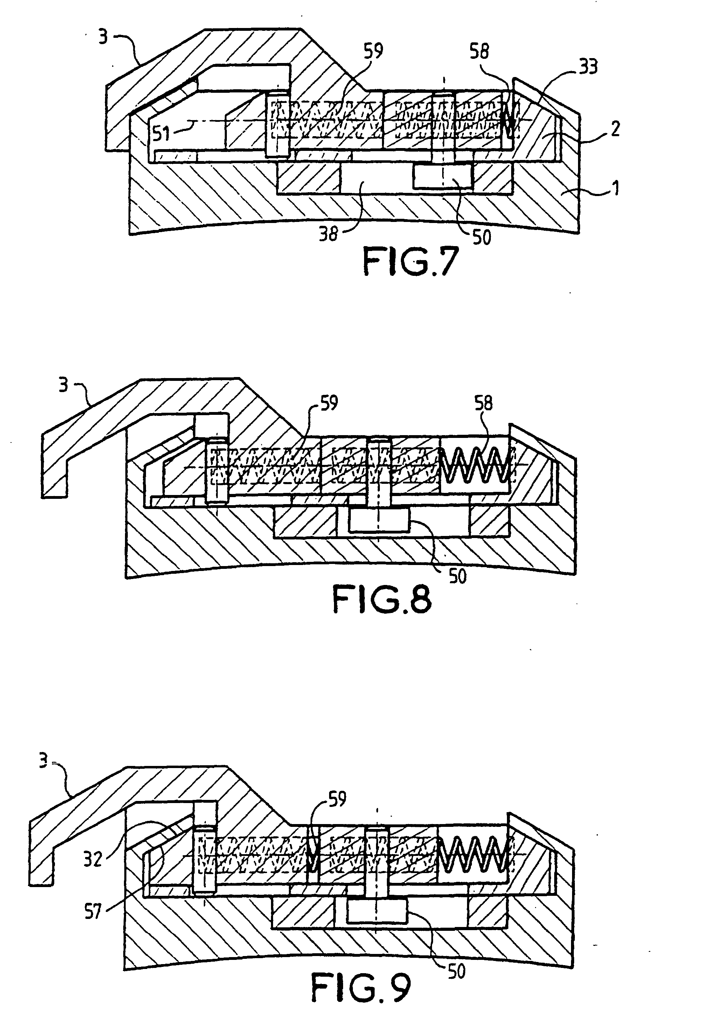

- la figure 7 représente une position déverrouillée ;
- la figure 9 représente une position verrouillée.
- la figure 8 représente une position intermédiaire entre la position déverrouillée et la position verrouillée ;

Pour plus de commodité, les mêmes repères topologiques représenteront les mêmes éléments dans les différentes figures.

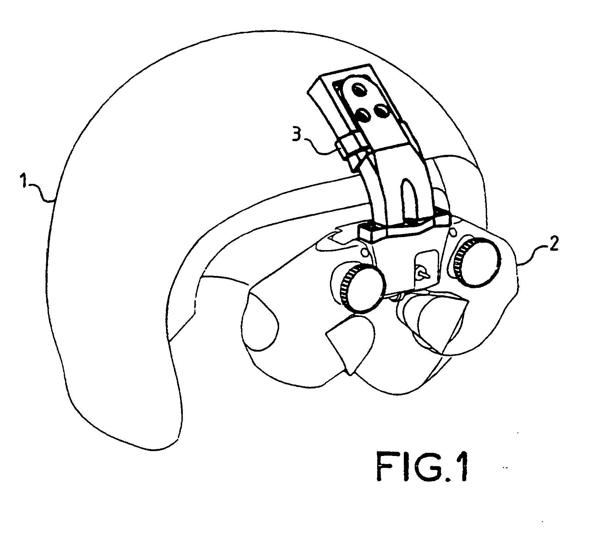

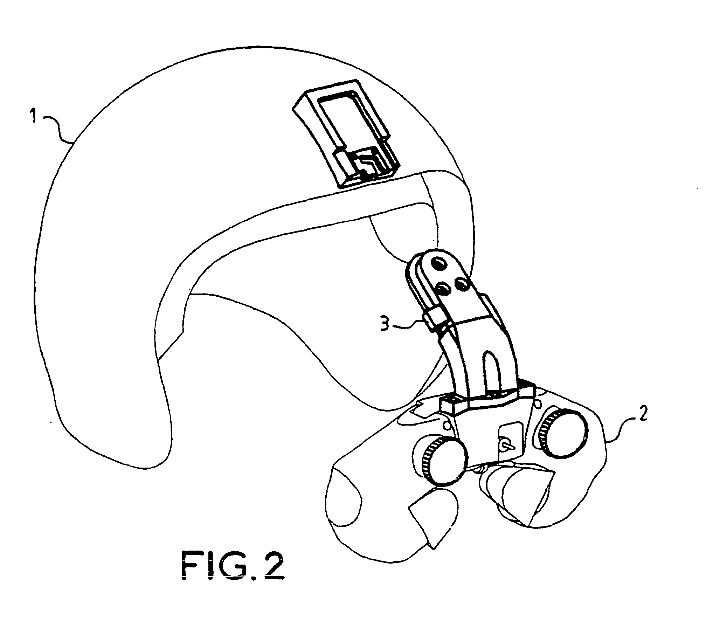

Les figures 1 et 2 représentent un casque 1 de protection de la tête d'un individu ainsi qu'une lunette de vision nocturne 2. A la figure 1 la lunette de vision nocturne 2 est positionnée et verrouillée sur le casque 1. Tandis qu'à la figure 2, la lunette 2 et le casque 1 sont représentés à distance. Il est bien entendu que l'exemple du montage d'une lunette 2 sur un casque 1 n'est donné qu'à titre d'exemple et que l'invention peut être mise en oeuvre à chaque fois que l'on veut monter et démonter plusieurs fois une pièce mobile, ici la lunette 2, par rapport à une pièce fixe, ici le casque 1, en assurant le verrouillage d'une position précise et reproductible de la pièce mobile 2 par rapport à la pièce fixe 1.

Dans le mode de réalisation particulier décrit plus loin en rapport avec la lunette 2 et le casque 1, le verrouillage et le déverrouillage de la position précise peut se faire très simplement d'une seule main en appuyant sur un bouton 3 situé sur la pièce mobile 2. Cette manoeuvre peut être effectuée sans être tenu de regarder le bouton 3 ce qui présente un avantage en terme d'ergonomie.

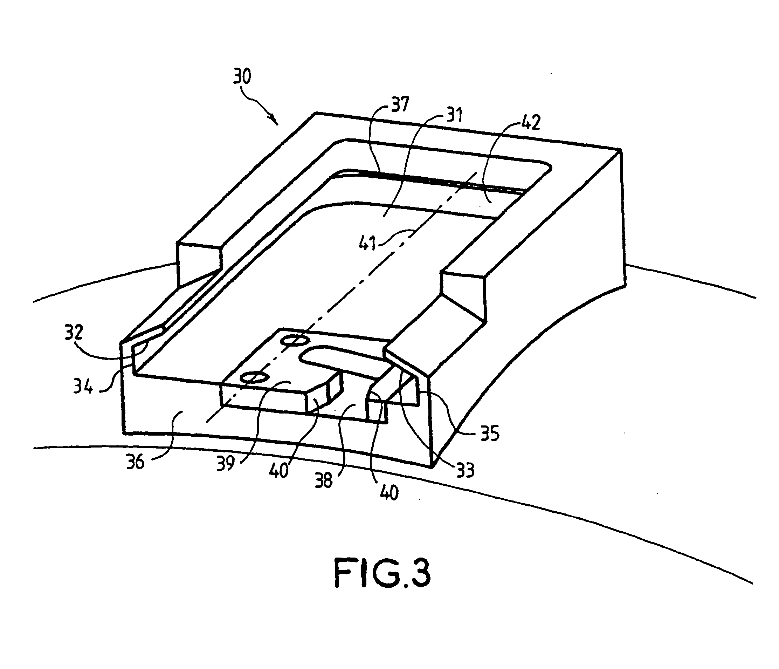

La pièce fixe 1 représentée figure 3 comprend des moyens pour assurer un positionnement isostatique de la pièce mobile 2 non représentée sur cette figure. Ces moyens comportent par exemple une queue d'aronde femelle 30. La queue d'aronde femelle 30 comporte une base 31 sensiblement plane ainsi que deux pans inclinés 32 et 33. La pente de chacun des deux pans inclinés forme un angle aigu avec la base 31. Les pentes de chaque pan incliné 32 et 33 sont avantageusement égales. Les intersections des pans inclinés 32 et 33 avec la base forment deux droites parallèles. Avantageusement, pour faciliter la réalisation de la queue d'aronde femelle 30, les intersections peuvent être en partie comblées par un congé ou un plan de raccordement joignant le pan incliné 32 ou 33 et la base 31 de la queue d'aronde femelle 30.

Sur la figure 3 un plan 34 raccorde le pan incliné 32 à la base 31 et un plan 35 raccorde le pan incliné 33 à la base 31. Les plans 34 et 35 sont par exemple sensiblement parallèles et perpendiculaires à la base 31. La queue d'aronde femelle 30 s'ouvre sur l'extérieure par exemple suivant un plan 36 perpendiculaire à la base 41 et aux plans 34 et 35.

La queue d'aronde femelle 30 permet une translation d'une queue d'aronde mâle complémentaire appartenant à la pièce mobile 2 suivant un axe 41 sensiblement perpendiculaire au plan 36. La queue d'aronde mâle sera décrite ultérieurement.

La queue d'aronde femelle 30 prévoit en outre un moyen pour arrêter en translation la queue d'aronde mâle coulissant dans la queue d'aronde femelle 30. Ce moyen comporte par exemple un pan incliné 37 dont la valeur de la pente par rapport à la base 31 est sensiblement voisine de la valeur de la pente des pans inclinés 32 et 33. Le pan incliné 37 est sensiblement plan. Son intersection avec la base 31 est sensiblement perpendiculaire aux intersections des pans inclinés 32 et 33 avec la base 31.

Avantageusement, un plan 42, sensiblement perpendiculaire à la base 31, comble en partie l'intersection du pan incliné 37 avec la base 31.

Avantageusement, on prévoit des congés de raccordement entre le pan incliné 37 et chacun des pans inclinés 32 et 33. Sur la figure 3 la représentation en perspective ne permet de visualiser que le congé raccordant le pan incliné 32 et le pan incliné 42.

On prévoit de même des congés de raccordement entre le plan 42 et chacun des plans 34 et 35.

En creux dans la base 31, la pièce fixe comporte une rainure 38 formée d'un fond sensiblement parallèle à la base 31 et de bords sensiblement plans et perpendiculaires à la base 31.

A partir du plan 36, au niveau duquel la rainure 38 s'ouvre sur l'extérieur, la rainure 38 s'étend dans un premier temps sensiblement parallèlement aux plans 34 et 35 puis s'incline d'un angle inférieur à 90°par exemple en direction du plan 34.

Un doigt 50 appartenant à la pièce mobile peut coulisser dans la rainure 38 en prenant appui sur ses bords. Le doigt 50 sera décrit ultérieurement. Avantageusement, pour éviter une usure prématurée de la base 31 lorsque le doigt 50 de la pièce mobile 2 frotte contre les bords de la rainure 38, on peut réaliser la rainure 38 dans une pièce rapportée 39 en matériau plus dur que le reste de la pièce fixe 1. Cela permet de réaliser le reste de la queue d'aronde femelle 30 dans un matériau plus tendre comme par exemple un matériau plastique et ainsi de réduire la masse de la pièce fixe 1. La pièce rapportée 39 est par exemple réalisée en acier.

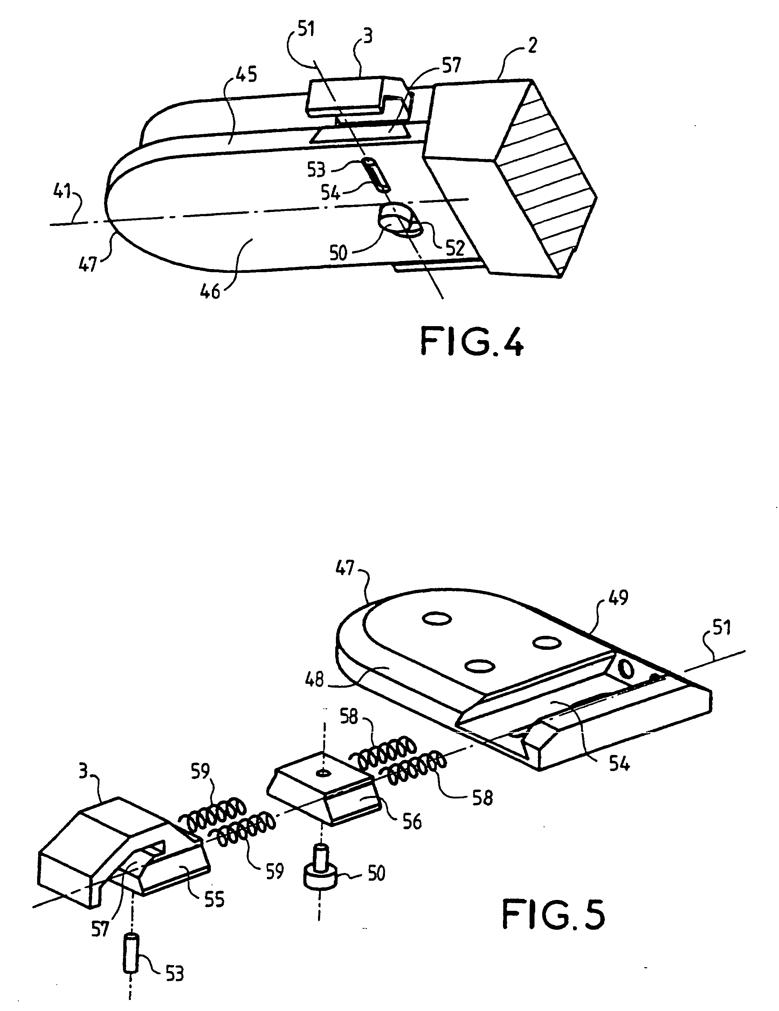

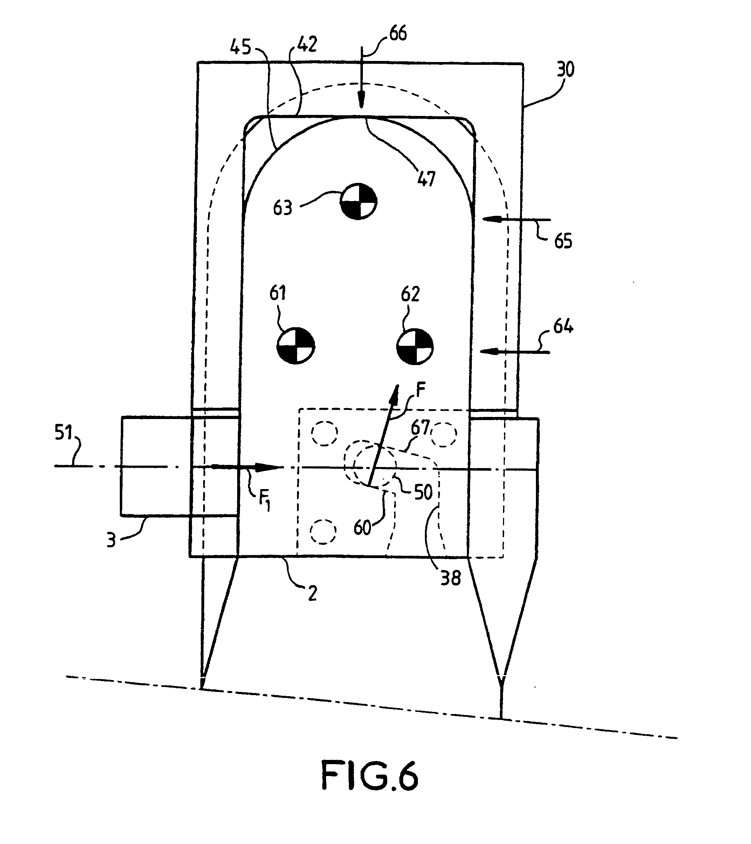

La figure 4 représente la pièce mobile 2 qui comporte la queue d'aronde mâle 45 complémentaire de la queue d'aronde femelle 30. La queue d'aronde mâle 45 comporte une base 46 et deux pans inclinés 48 et 49 bien visible figure 5. La queue d'aronde mâle 45 comporte une extrémité 47 destinée à venir en contact avec le pan incliné 37, extrémité qui n'est avantageusement pas plane mais sensiblement de révolution autour d'un axe perpendiculaire à la base 46 et situé sensiblement à égale distance des deux pans inclinés 48 et 49. Ainsi le contact entre le pan incliné 37 et l'extrémité 47 sera sensiblement ponctuel.

Les intersections des pans inclinés 47, 48 et 49 avec la base 46 sont tronquées par des surfaces par exemple sensiblement planes de telle sorte que ces surfaces ne puissent pas venir en contact avec les plans 34, 35 et 42 de la queue d'aronde femelle 30.

Le doigt 50, bien visible à la figure 4, est proéminent par rapport à la base 46. Il est sensiblement cylindrique. Son diamètre est légèrement inférieur à la largeur de la rainure 38 afin qu'il puisse s'y déplacer. Sa hauteur, mesurée par rapport à la base 46, est légèrement inférieure à la profondeur de la rainure 38, profondeur mesurée perpendiculairement à la base 31, afin que seule la partie cylindrique du doigt 50 soit en contact avec les bords de la rainure 38. Le doigt 50 peut se déplacer en translation par rapport au reste de la pièce mobile 2 sensiblement suivant un axe 51 contenu dans un plan parallèle à la base 46 et perpendiculaire à l'axe 41. La translation du doigt 50 par rapport à la pièce mobile 2 est limitée dans les deux sens de la translation, par exemple au moyen d'un trou oblong 52 réalisé dans la base 46, au travers duquel le doigt 50 passe.

A la figure 4, on distingue également le bouton 3 permettant le déplacement du doigt 50 en translation suivant l'axe 51. Le bouton 3 peut être solidaire du doigt 50, mais avantageusement il peut se déplacer en translation par rapport au reste de la pièce mobile 2 suivant l'axe 51 indépendamment du doigt 50. Comme pour le doigt 50, on limite la translation du bouton 3 par exemple au moyen d'un téton 53 solidaire du bouton 3, le téton 53 étant susceptible de se déplacer dans un trou oblong 54 réalisée dans la base 46. Contrairement au doigt 50, le téton 53 n'est pas proéminent par rapport à la base 46 afin de ne pas gêner le déplacement en translation suivant l'axe 41 la queue d'aronde mâle 45 par rapport à la queue d'aronde femelle 30.

Lorsque le bouton 3 n'est pas solidaire du doigt 50, il comporte une face 57, par exemple sensiblement parallèle au pan incliné 48, destinée à prendre appui contre le pan incliné 32 de la queue d'aronde femelle 30.

Des moyens de guidage du déplacement en translation du bouton 3 et du doigt 50 suivant l'axe 51 sont prévus dans la pièce mobile 2. Les moyens de guidage comportent par exemple un second couple de queue d'aronde. Ce second couple comporte une petite queue d'aronde femelle 54 réalisée dans le corps de la pièce mobile 2 et deux petites queues d'aronde mâles 55 et 56, réalisées l'une 55 dans le bouton 3 et l'autre 56 solidaire du doigt 50. Avantageusement l'axe 51 de déplacement du second couple est perpendiculaire à l'axe 41 de déplacement du premier couple de queue d'aronde.

Un élément élastique 58 est prévu pour tendre à rapprocher le doigt 50 de l'une des extrémités du trou oblong 52. Lorsque l'on appui sur le bouton 3, on comprime l'élément élastique 58. Cet élément élastique comporte par exemple deux ressorts hélicoïdaux.

Lorsque le bouton 3 n'est pas solidaire du doigt 50, la pièce mobile comporte un second élément élastique 59 tendant à écarter le bouton 3 du doigt 50. Le second élément élastique 59 peut également comporter deux ressorts hélicoïdaux. La fonction des deux éléments élastiques 58 et 59 sera décrite plus en détail aux moyens des figures 7 à 9.

La figure 6 représente la queue d'aronde mâle 45 engagée dans la queue d'aronde femelle 30. L'extrémité 47 de la queue mâle 45 est en contact avec le pan incliné 37 de la queue d'aronde femelle 30. Le doigt 50 est quant à lui en contact avec un des bords 60 de la rainure 38. Le bord 60 est avantageusement une surface sensiblement plane perpendiculaire à la base 46 et formant un angle aigu avec l'axe 51. La valeur de l'angle aigu est par exemple de l'ordre de 15°. Le doigt 50 a une forme convexe par exemple circulaire de façon à former un contact sensiblement ponctuel entre le doigt 50 et le bord 60 qui est sensiblement plan. Avantageusement, le doigt 50 comporte un moyen pour limiter son frottement avec le bord 60. Ce moyen comporte par exemple un roulement à bille dont la cage extérieure est en contact avec le bord 60. La cage intérieure de ce roulement sera fixée à la petite queue d'aronde mâle 56. Ainsi lorsque l'élément élastique 58 repousse le doigt 50 contre le bord 60, la pièce femelle 1 engendre un effort F sur la pièce mâle 2, dirigé sensiblement perpendiculairement au bord 60.

L'effort F a pour effet de plaquer la queue d'aronde mâle 45 à l'intérieur de la queue d'aronde femelle 30.

Plus précisément, lorsque l'effort F plaque la queue d'aronde mâle 45 contre les pans inclinés 33 et 37 de la queue d'aronde femelle 30, il tend également à plaquer la base 46 de la queue d'aronde mâle 45 contre la base 31 de la queue d'aronde femelle 30. Les deux bases 31 et 46 en contact forment un contact plan définissant trois points 61, 62 et 63 de positionnement isostatique. Par ailleurs le contact entre la queue d'aronde mâle 45 et le pan incliné 33 doit être de longueur suffisante pour matérialiser une ligne de contact ce qui définie deux points isostatiques supplémentaires 64 et 65. Enfin le dernier point de positionnement isostatique 66 est défini au niveau du contact sensiblement ponctuel, entre l'extrémité 47 de la queue d'aronde mâle 45 et le pan incliné 37. Le dernier point isostatique 66 arrête la translation des deux queues d'aronde l'une par rapport à l'autre. Il est bien entendu que les queues d'aronde 30 et 45 ne sont données qu'à titre d'exemple et que tout autres moyens de positionnement, entre la pièce mobile 2 et la pièce fixe 1 aboutissant à un positionnement isostatique, permettent de repositionner de façon précise la pièce mobile 2 par rapport à la pièce fixe 1.

L'élément élastique 58 tend à appliquer le doigt 50 contre le bord 60 de façon à ce que l'effort F maintienne le contact des six points isostatiques 60 à 66.

L'orientation du bord 60 est telle que la direction de l'effort F soit parallèle aux bases 31 et 46 des deux queues d'aronde 30 et 45. De plus, la position et l'orientation du bord 60 est telle que la direction de l'effort F passe entre les quatrième et cinquième points isostatiques 64 et 65 d'une part et le sixième point isostatique 67 d'autre part de façon à éviter tout décollement de l'un de ces points.

Avantageusement, l'orientation du bord 60 et le coefficient de frottement du doigt 50 par rapport au bord 60 sont définis de façon à ce que seul un effort tendant à comprimer l'élément élastique 58 puisse déplacer la pièce mobile 2 par rapport à la pièce fixe 1 en évitant que tout effort, notamment un effort dont la direction est portée 41 ne puisse déplacer la pièce mobile 2 par rapport à la pièce fixe 1. Il est possible de dégrader légèrement cette caractéristique en définissant l'orientation du bord 60 et le coefficient de frottement de telle sorte que pour désaccoupler les queues d'aronde 30 et 45 sans agir sur le bouton 3, il serait nécessaire de produire un effort très important.

Lorsque le bouton 3 n'est pas solidaire du doigt 50, la face 57 exerce un effort - F1 sur le pan incliné 32 de la queue d'aronde femelle 30. L'effort - F1 est généré par les éléments élastiques 58 et 59. Il est porté par l'axe 51. Sur la figure 6 on a représenté la réaction F1, opposée à l'effort - F1, du pan incliné 32 sur la pièce mobile 2. La réaction F1, combinée à l'effort F, améliore le contact de la pièce mobile 2 sur les deux points de contact isostatique 64 et 65.

Les directions de chacun des deux efforts F et F1 sont parallèles aux bases 31 et 46 des deux queues d'aronde 30 et 45.

La face 57 et l'élément élastique 59 forment des moyens supplémentaires s'opposant au décollement des deux points isostatiques 64 et 65.

Les figures 7, 8 et 9 permettent de mieux comprendre le verrouillage et le déverrouillage de la pièce mobile 2 par rapport à la pièce fixe 1. Ces figures représentent un dispositif conforme à l'invention dans lequel le bouton 3 n'est pas solidaire du doigt 50. Les trois figures 7 à 9 sont représentées en coupe par un plan parallèle au plan 36 et contenant l'axe 51. Sur les trois figures la pièce mobile 2 est mise en position par rapport à la pièce fixe 1.

A la figure 7, un utilisateur, non représenté, appui sur le bouton 3 en direction du pan incliné 33. Les deux éléments élastiques 58 et 59 sont comprimé et le doigt 50 est en appui sur un des bords de la rainure 38 de telle sorte à permettre la sortie de la queue d'aronde mâle 45 de la queue d'aronde femelle 30.

A la position représentée figure 8, le bouton 3 est partiellement relâché. La raideur de l'élément élastique 58 est choisie supérieure à celle de l'élément élastique 59 de façon à ce que dans cette position, le doigt 50 vienne en appui contre le bord 60 de la rainure 38 tandis que le bouton 3 reste en appui contre le doigt 50. Sur la figure 8, le bord 60 n'apparaît pas car il se trouve en avant du plan de coupe. Dans cette position, le verrouillage de la position isostatique est déjà réalisé lorsque le doigt 50 prend appui contre le bord 60. Mais avantageusement on complète ce verrouillage en relâchant complètement le bouton 3 jusqu'à obtenir la position représentée figure 9.

Dans cette position, le doigt 50 est toujours en appui contre le bord 60 et de plus, l'élément élastique 59 se détendant, la face 57 du bouton 3 vient en appui contre le pan incliné 32 de la queue d'aronde femelle 30.

Avantageusement la rainure 38 comporte un bord 67, visible à la figure 6. Le bord 67 est parallèle au bord 60. Les deux bords 60 et 67 sont espacés d'une distance légèrement supérieure au diamètre du doigt 50 de telle façon que le doigt 50 ne soit jamais au contact des deux bords 60 et 67 simultanément. En position verrouillée, représentée figure 9, le doigt 50 est en appui contre le bord 60 et lorsqu'on appuie sur le bouton 3, le doigt 50 vient en contact avec le bord 67 de telle façon que le bord 67 exerce un effort opposé à l'effort F sur le doigt 50 ce qui aide au dégagement de la queue d'aronde mâle 45 hors de la queue d'aronde femelle 30.

Avantageusement encore, la pièce fixe comporte des moyens pour comprimer l'élément élastique 58 lorsque la pièce mobile 2 s'approche de sa position isostatique par rapport à la pièce fixe 1 sans qu'aucune action extérieure autre que celle nécessaire à l'approche ne soit nécessaire pour comprimer l'élément élastique 58. Ces moyens comportent par exemple au moins un chanfrein d'entrée 40 permettant au doigt 50 de se déplacer pour pénétrer dans la rainure 38 lors de l'approche. Sur la figure 3, deux chanfreins 40 élargissant l'entrée de la rainure 38 ont été représentés. Ces moyens permettent d'éviter d'appuyer sur le bouton 3 lors de l'approche.

Lorsque le bouton 3 n'est pas solidaire du doigt 50, on prévoit également des moyens pour que, lorsque la pièce mobile 2 s'approche de sa position isostatique, l'élément élastique 59 soit comprimé même lorsqu'aucun effort est exercé sur le bouton 3. Ces moyens comportent par exemple un chanfrein réalisé sur le pan incliné 32 ou sur la face 57.

## Revendications

1. Dispositif de verrouillage d'une position d'une pièce mobile (2) par rapport à une pièce fixe (1), le positionnement de la pièce mobile (2) par rapport à la pièce fixe (1) étant isostatique, le dispositif étant **caractérisé en ce qu'**il comporte des moyens (50, 58, 60) générant un effort (F, F1), s'opposant au décollement de tous les points (61 à 66) de contact isostatique entre la pièce mobile (2) et la pièce fixe (1) afin de verrouiller la position.

2. Dispositif selon la revendication 1, **caractérisé en ce que** pour assurer le positionnement isostatique, le dispositif comporte une queue d'aronde femelle (30) appartenant à la pièce fixe (1) et une queue d'aronde mâle (45) appartenant à la pièce mobile (2), **en ce que** les bases (31, 46) des deux queues d'aronde (30, 45) sont en contact et définissent trois premiers points isostatiques (61, 62, 63), et **en ce que** deux pans inclinés (33, 49) en contact appartenant chacun à une des queues d'aronde (30, 45) définissent les quatrième et cinquième points isostatiques (64, 65).

3. Dispositif selon la revendication 2, **caractérisé en ce que** le sixième point isostatique (66) arrête la translation des deux queues d'aronde (30, 45) l'une par rapport à l'autre, et **en ce que** le sixième point (66) est formé entre un pan (37) appartenant à la pièce fixe (1), incliné par rapport à la base (31) de la queue d'aronde femelle (30) et distinct des pans inclinés (32, 33) de la queue d'aronde femelle (30) et un point (47) de la pièce mobile (2) venant en butée contre ce pan (42).

4. Dispositif selon l'une quelconque des revendications 2 ou 3, **caractérisé en ce que** la direction de l'effort (F, F1) est parallèle aux bases (31, 46) des queues d'aronde (30, 45).

5. Dispositif selon les revendications 3 et 4, **caractérisé en ce que** la pièce mobile (2) comporte un doigt (50) mobile en translation par rapport à la pièce mobile (2) et destiné à prendre appui contre une surface (60, 67) de la pièce fixe (1), et **en ce que** la position et l'orientation de la surface (60, 67) sont définies de telle sorte que l'effort soit dirigé entre les quatrième et cinquième points isostatiques (64, 65) d'une part et le sixième point isostatique (67) d'autre part.

6. Dispositif selon la revendication 5, **caractérisé en ce qu'**au voisinage du contact entre le doigt (50) et la surface (60, 67) le doigt (50) est sensiblement convexe et la surface (60, 67) est sensiblement plane.

7. Dispositif selon la revendication 5, **caractérisé en ce qu'**un élément élastique (58) tend à appliquer le doigt (50) contre la surface (60) de façon à ce que l'effort (F) maintienne le contact des six points isostatiques (60 à 66).

8. Dispositif selon l'une quelconque des revendications 5 à 7, **caractérisé en ce que** la pièce fixe (1) comporte des moyens (40) pour comprimer l'élément élastique (58, 59), lorsque la pièce mobile (2) s'approche de sa position isostatique par rapport à la pièce fixe (1) sans qu'aucune action extérieure autre que celle nécessaire à l'approche ne soit nécessaire pour comprimer l'élément élastique (58, 59).

9. Dispositif selon l'une quelconque des revendications 5 à 8, **caractérisé en ce que** la translation du doigt (50) par rapport à la pièce mobile (2) est limitée dans les deux sens de la translation.

10. Dispositif selon l'une quelconque des revendications 5 à 9, **caractérisé en ce que** l'orientation de la surface (60) et le coefficient de frottement du doigt (50) par rapport à la surface (60) sont définis de façon à ce que seul un effort tendant à comprimer l'élément élastique (58) puisse déplacer la pièce mobile (2) par rapport à la pièce fixe (1).

11. Dispositif selon l'une quelconque des revendications 2 à 10, **caractérisé en ce qu'**il comporte en outre des moyens supplémentaires (57) s'opposant au décollement des quatrième et cinquième points isostatiques (64, 65).

12. Dispositif selon la revendication 11, **caractérisé en ce que** les moyens supplémentaires comportent une face (57) appartenant à la pièce mobile (2) et s'appuyant sur le pan incliné (32) de la queue d'aronde femelle (30) opposé au pan incliné (33) de la queue d'aronde femelle (30) définissant les quatrième et cinquième points isostatiques (64, 65).

13. Dispositif selon la revendication 12, **caractérisé en ce que** la face (57) appartient à un élément (3) mobile en translation par rapport à la pièce mobile (2) suivant un axe (51) sensiblement perpendiculaire à l'axe (41) de déplacement des queues d'arondes (30, 45) l'une par rapport à l'autre, **en ce que** l'élément mobile (3) est relié à la pièce mobile (2) par un deuxième élément élastique (59).

14. Dispositif selon les revendications 5 et 13, **caractérisé en ce que** l'axe (51) de translation du doigt (50) est confondu avec l'axe de translation de l'élément mobile (3) et **en ce que** le deuxième élément élastique (59) tend à écarter l'élément mobile (3) du doigt (50).

15. Dispositif selon la revendication 14, **caractérisé en ce que** la translation du doigt (50) de l'élément mobile (3) est guidée au moyen d'une seconde queue d'aronde femelle (54) appartenant à la pièce mobile (2) dans laquelle coulisse une seconde queue d'aronde mâle (56) solidaire du doigt (50) et une troisième queue d'aronde mâle (55) appartenant à l'élément mobile (3).

16. Dispositif selon l'une quelconque des revendications 14 ou 15, **caractérisé en ce que** le déverrouillage de la pièce mobile (2) par rapport à la pièce fixe (1) est obtenu en exerçant un effort sur l'élément mobile (3) en direction des quatrième et cinquième points isostatiques (64, 65).

17. Dispositif selon l'une quelconque des revendications 14 à 16, **caractérisé en ce que** la raideur de l'élément élastique (58) est supérieure à la raideur du deuxième élément élastique (59).

## Claims

1. Device for locking a position of a moving part (2) with respect to a fixed part (1), the moving part (2) being positioned with respect to the fixed part (1) isostatically, the device being **characterized in that** it comprises means (50, 58, 60) generating a force (F, F1) opposing the loss of contact of all the points (61 to 66) of isostatic contact between the moving part (2) and the fixed part (1) so as to lock the position.

2. Device according to Claim 1, **characterized in that**, in order to provide isostatic positioning, the device comprises a female dovetail (30) belonging to the fixed part (1) and a male dovetail (45) belonging to the moving part (2), **in that** the bases (31, 46) of the two dovetails (30, 45) are in contact and define three first isostatic points (61, 62, 63) and **in that** two inclined faces (33, 49) in contact, each belonging to one of the dovetails (30, 45), define the forth and fifth isostatic points (64, 65).

3. Device according to Claim 2, **characterized in that** the sixth isostatic point (66) stops translation of the two dovetails (30, 45), one with respect to the other, and **in that** the sixth point (66) is formed between a face (37) belonging to the fixed part (1), which face is inclined with respect to the base (31) of the female dovetail (30) and distinct from the inclined faces (32, 33) of the female dovetail (30), and a point (47) on the moving part (2) coming into abutment with this face (42).

4. Device according to either of Claims 2 and 3, **characterized in that** the direction of the force (F, F1) is parallel to the bases (31, 46) of the dovetails (30, 45).

5. Device according to Claims 3 and 4, **characterized in that** the moving part (2) has a finger (50) that can move in translation with respect to the moving part (2) and is intended to bear against a surface (60, 67) of the fixed part (1), and **in that** the position and orientation of the surface (60, 67) are defined so that the force is directed between the fourth and fifth isostatic points (64, 65) on the one hand, and the sixth isostatic point (67) on the other hand.

6. Device according to Claim 5, **characterized in that** near the contact between the finger (50) and the surface (60, 67), the finger (50) is roughly convex and the surface (60, 67) is roughly planar.

7. Device according to Claim 5, **characterized in that** an elastic element (58) tends to press the finger (50) against the surface (60) in such a way that the force (F) maintains the contact of the six isostatic points (60 to 66).

8. Device according to any of Claims 5 to 7, **characterized in that** the fixed part (1) comprises means (40) for compressing the elastic element (58, 59) when the moving part (2) nears its isostatic position with respect to the fixed part (1) without any external action other than the action necessary for the bringing-together being needed to compress the elastic element (58, 59).

9. Device according to any of Claims 5 to 8, **characterized in that** the translational movement of the finger (50) with respect to the moving part (2) is limited in both the directions of the translational movement.

10. Device according to any of Claims 5 to 9, **characterized in that** the orientation of the surface (6) and the coefficient of friction of the finger (50) with respect to the surface (60) are defined such that only a force tending to compress the elastic element (58) can move the moving part (2) with respect to the fixed part (1).

11. Device according to any of Claims 2 to 10, **characterized in that** it further comprises additional means (57) opposing the loss of contact of the fourth and fifth isostatic points (64, 65).

12. Device according to Claim 11, **characterized in that** the additional means comprise a facet (57) belonging to the moving part (2) and pressing against the opposite inclined face (32) of the female dovetail (30) to the inclined face (33) of the female dovetail (30) that defines the fourth and fifth isostatic points (64, 65).

13. Device according to Claim 12, **characterized in that** the facet (57) belongs to an element (3) that can move in translation with respect to the moving part (2) along an axis (51) roughly perpendicular to the axis (41) of travel of the dovetails (30, 45) one with respect to the other, and **in that** the moving element (3) is connected to the moving part (2) by a second elastic element (59).

14. Device according to Claims 5 and 13, **characterized in that** the axis (51) of translation of the finger (50) is coincident with the axis of translation of the moving element (3) and **in that** the second elastic element (59) tends to separate the moving element (3) from the finger (50).

15. Device according to Claim 14, **characterized in that** the translational movement of the finger (50) of the moving element (3) is guided by means of a second female dovetail (54) belonging to the moving part (2) in which there slides a second male dovetail (56) secured to the finger (50) and a third male dovetail (55) belonging to the moving element (3).

16. Device according to either of Claims 14 and 15, **characterized in that** the moving part (2) is unlocked with respect to the fixed part (1) by exerting a force on the moving element (3) in the direction of the fourth and fifth isostatic points (64, 65).

17. Device according to any of Claims 14 to 16, **characterized in that** the stiffness of the elastic element (58) is greater than the stiffness of the second elastic element (59).

## Patentansprüche

1. Vorrichtung zur Positionsverriegelung eines beweglichen Teils (2) bezüglich eines ortsfesten Teils (1), wobei die Positionierung des beweglichen Teils (2) bezüglich des ortsfesten Teils (1) isostatisch ist, **dadurch gekennzeichnet, dass** sie Mittel (50, 58, 60) aufweist, die eine Kraft (F, F1) erzeugen, die dem Ablösen aller Punkte (61 bis 66) des isostatischen Kontakts zwischen dem beweglichen Teil (2) und dem ortsfesten Teil (1) entgegenwirkt, um die Position zu verriegeln.

2. Vorrichtung nach Anspruch 1, **dadurch gekennzeichnet, dass** sie zur Gewährleistung der isostatischen Positionierung einen Aufnahme-Schwalbenschwanz (30), der zum ortsfesten Teil (1) gehört, und einen Einsteck-Schwalbenschwanz (45) aufweist, der zum beweglichen Teil (2) gehört, dass die Grundplatten (31, 46) der beiden Schwalbenschwänze (30, 45) miteinander in Kontakt stehen und drei erste isostatische Punkte (61, 62, 63) definieren, und dass zwei in Kontakt stehende, geneigte Kantenstreifen (33, 49), die zu je einem der Schwalbenschwänze (30, 45) gehören, den vierten und den fünften isostatischen Punkt (64, 65) definieren.

3. Vorrichtung nach Anspruch 2, **dadurch gekennzeichnet, dass** der sechste isostatische Punkt (66) die Translationsbewegung der beiden Schwalbenschwänze (30, 45) zueinander anhält, und dass der sechste Punkt (66) zwischen einem zum ortsfesten Teil (1) gehörenden Kantenstreifen (37), der bezüglich der Grundplatte (31) des Aufnahme-Schwalbenschwanzes (30) geneigt ist und sich von den geneigten Kantenstreifen (32, 33) des Aufnahme-Schwalbenschwanzes (30) unterscheidet, und einem Punkt (47) des beweglichen Teils (2) geformt wird, der gegen diesen Kantenstreifen (42) in Anschlag kommt.

4. Vorrichtung nach einem der Ansprüche 2 oder 3, **dadurch gekennzeichnet, dass** die Richtung der Kraft (F, F1) parallel zu den Grundplatten (31, 46) der Schwalbenschwänze (30, 45) liegt.

5. Vorrichtung nach den Ansprüchen 3 und 4, **dadurch gekennzeichnet, dass** das bewegliche Teil (2) einen bezüglich des beweglichen Teils (2) translationsbeweglichen Finger (50) aufweist, der dazu bestimmt ist, gegen eine Fläche (60, 67) des ortsfesten Teils (1) in Anlage zu kommen, und dass die Position und die Ausrichtung der Fläche (60, 67) derart definiert sind, dass die Kraft zwischen den vierten und den fünften isostatischen Punkt (64, 65) einerseits und den sechsten isostatischen Punkt (67) andererseits gerichtet ist.

6. Vorrichtung nach Anspruch 5, **dadurch gekennzeichnet, dass** der Finger (50) in der Nähe des Kontakts zwischen dem Finger (50) und der Fläche (60, 67) im wesentlichen konvex und die Fläche (60, 67) im wesentlichen eben ist.

7. Vorrichtung nach Anspruch 5, **dadurch gekennzeichnet, dass** ein elastisches Element (58) die Tendenz hat, den Finger (50) derart gegen die Fläche (60) anzulegen, dass die Kraft (F) den Kontakt der sechs isostatischen Punkte (60 bis 66) aufrechterhält.

8. Vorrichtung nach einem der Ansprüche 5 bis 7, **dadurch gekennzeichnet, dass** das ortsfeste Teil (1) Mittel (40) aufweist, um das elastische Element (58, 59) zusammenzudrücken, wenn das bewegliche Teil (2) sich seiner isostatischen Position bezüglich des ortsfesten Teils (1) nähert, ohne dass eine äußere Einwirkung, abgesehen von derjenigen, die für die Annäherung notwendig ist, benötigt wird, um das elastische Element (58, 59) zusammenzudrücken.

9. Vorrichtung nach einem der Ansprüche 5 bis 8, **dadurch gekennzeichnet, dass** die Translationsbewegung des Fingers (50) bezüglich des beweglichen Teils (2) in beiden Translationsrichtungen begrenzt ist.

10. Vorrichtung nach einem der Ansprüche 5 bis 9, **dadurch gekennzeichnet, dass** die Ausrichtung der Fläche (60) und der Reibungskoeffizient des Fingers (50) bezüglich der Fläche (60) so definiert werden, dass nur eine Kraft, die die Tendenz hat, das elastische Element (58) zusammenzudrücken, das bewegliche Teil (2) bezüglich des ortsfesten Teils (1) verschieben kann.

11. Vorrichtung nach einem der Ansprüche 2 bis 10, **dadurch gekennzeichnet, dass** sie außerdem zusätzliche Mittel (57) aufweist, die dem Ablösen des vierten und des fünften isostatischen Punkts (64, 65) entgegenwirken.

12. Vorrichtung nach Anspruch 11, **dadurch gekennzeichnet, dass** die zusätzlichen Mittel eine Fläche (57) aufweisen, die zum beweglichen Teil (2) gehört und sich auf den geneigten Kantenstreifen (32) des Aufnahme-Schwalbenschwanzes (30) gegenüber dem geneigten Kantenstreifen (33) des Aufnahme-Schwalbenschwanzes (30) auflegt, der den vierten und den fünften isostatischen Punkt (64, 65) definiert.

13. Vorrichtung nach Anspruch 12, **dadurch gekennzeichnet, dass** die Fläche (57) zu einem Element (3) gehört, das bezüglich des beweglichen Teils (2) gemäß einer Achse (51) im wesentlichen senkrecht zur Verschiebungsachse (41) der Schwalbenschwänze (30, 45) zueinander translationsbeweglich ist, und dass das bewegliche Element (3) mit dem beweglichen Teil (2) über ein zweites elastisches Element (59) verbunden ist.

14. Vorrichtung nach den Ansprüche 5 und 13, **dadurch gekennzeichnet, dass** die Translationsachse (51) des Fingers (50) mit der Translationsachse des beweglichen Elements (3) zusammenfällt, und dass das zweite elastische Element (59) die Tendenz hat, das bewegliche Element (3) vom Finger (50) zu entfernen.

15. Vorrichtung nach Anspruch 14, **dadurch gekennzeichnet, dass** die Translationsbewegung des Fingers (50) des beweglichen Elements (3) mit Hilfe eines zum beweglichen Teil (2) gehörenden zweiten Aufnahme-Schwalbenschwanzes (54) geführt wird, in dem ein zweiter Einsteck-Schwalbenschwanz (56), der fest mit dem Finger (50) verbunden ist, und ein dritter Einsteck-Schwalbenschwanz (55) gleiten, der zum beweglichen Element (3) gehört.

16. Vorrichtung nach einem der Ansprüche 14 oder 15, **dadurch gekennzeichnet, dass** die Entriegelung des beweglichen Teils (2) bezüglich des ortsfesten Teils (1) erhalten wird, indem eine Kraft auf das bewegliche Element (3) in Richtung des vierten und des fünften isostatischen Punkts (64, 65) ausgeübt wird.

17. Vorrichtung nach einem der Ansprüche 14 bis 16, **dadurch gekennzeichnet, dass** die Steifheit des elastischen Elements (58) größer ist als die Steifheit des zweiten elastischen Elements (59).
